# EUROPEAN PATENT SPECIFICATION

(11) **EP 1 201 967 B1**
(45) Date of publication and mention of the grant of the patent: **19.02.2003**
(21) Application number: 00830689.6
(22) Date of filing: 23.10.2000
(51) Int. Cl.: F16H 15/52

(54) **Mechanical variable-speed drive**
Mechanisches Getriebe mit variabler Übersetzung
Transmission mécanique à rapport variable

(43) Date of publication of application: 02.05.2002
(73) Proprietor: Bonfiglioli Riduttori S.p.A., 40012 Calderara di Reno (IT); Umbra Cuscinetti S.p.A., 06034 Foligno (IT)
(72) Inventor: Perni, Federico, 06039 Foligno (IT); Pizzoni, Luciano, 06034 Foligno (IT); Porzi, Carlo, 06034 Foligno (IT); Depietri, Pietro, 40141 Bologna (IT); Cognigni, Enzo, 40129 Bologna (IT)
(74) Representative: Eccetto, Mauro

(56) References cited:
- EP-A- 0 311 734
- EP-A- 0 459 234
- GB-A- 918 085

## Description

The present invention relates to a mechanical variable-speed drive.

More specifically, the present invention relates to a mechanical variable-speed drive of the type disclosed, for example, in EP-A-0 311 734, which shows the features of the preamble of claim 1, shown in Figure 1, and comprising an epicyclic gear A interposed between an input shaft B and an output shaft C mounted to rotate about a given longitudinal first axis D at a first and second angular velocity respectively.

Epicyclic gear A comprises a sun gear E connected in angularly-fixed manner to input shaft B; a planet carrier F connected in angularly-fixed manner to output shaft C; an outer ring gear G substantially coaxial with first axis D; and a number of planet gears H, each having a respective longitudinal second axis I substantially parallel to first axis D. Planet gears H are connected frictionally to sun gear E and ring gear G to rotate about respective second axes I and simultaneously about first axis D, so as to rotate planet carrier F, and hence output shaft C, about first axis D.

Ring gear G normally comprises an angularly- and axially-fixed first ring L; and a second ring M movable to and from first ring L to control the radial position of second axes I with respect to first axis D and vary the velocity ratio of input shaft B and output shaft C.

The variable-speed drive also comprises an angularly- and axially-fixed third ring N on the opposite side of second ring M with respect to first ring L; and connecting means for connecting second ring M to third ring N, and which enable second ring M to move along first axis D as it rotates about first axis D.

The connecting means normally comprise an annular member O interposed between second and third ring M, N and supporting for rotation a number of balls P, which are distributed about first axis D and simultaneously engage two annular tracks of two cams Q, formed on second and third ring M, N respectively, so as to move second ring M axially as it rotates about first axis D.

The connecting means are therefore relatively complex and expensive by comprising cams Q and annular member O supporting balls P, and on account of the difficulty in both forming cams Q on respective rings M, N, and assembling annular member O, i.e. positioning balls P between cams Q.

It is an object of the present invention to provide a variable-speed drive designed to eliminate the aforementioned drawbacks.

According to the present invention, there is provided a variable-speed drive as claimed in Claim 1.

A non-limiting embodiment of the present invention will be described by way of example with reference to the accompanying drawings, in which:
Figure 2 shows a longitudinal section of a preferred embodiment of the mechanical variable-speed drive according to the present invention;

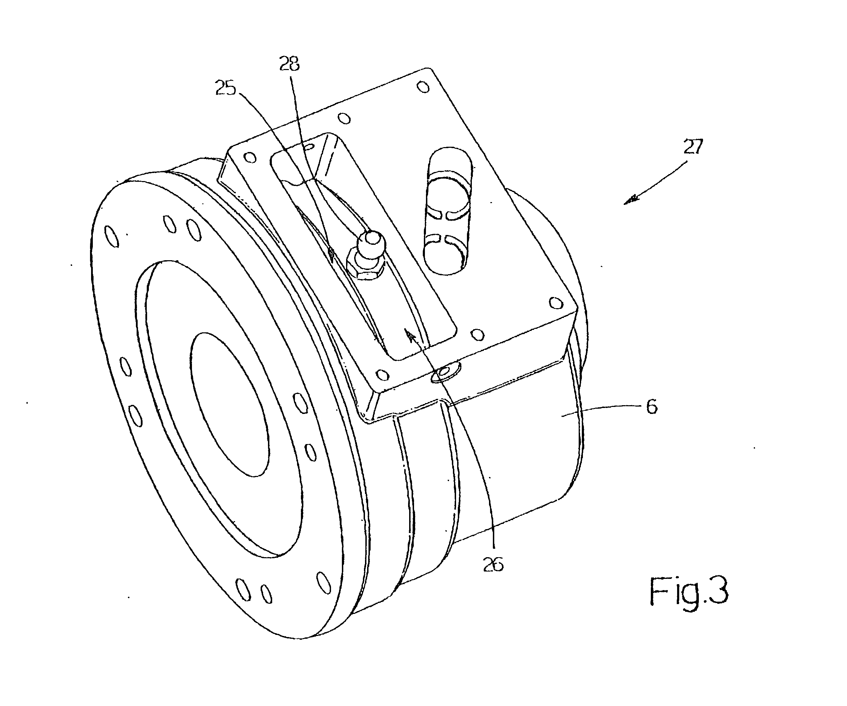

Figure 3 shows a view in perspective of a detail of the Figure 2 variable-speed drive.

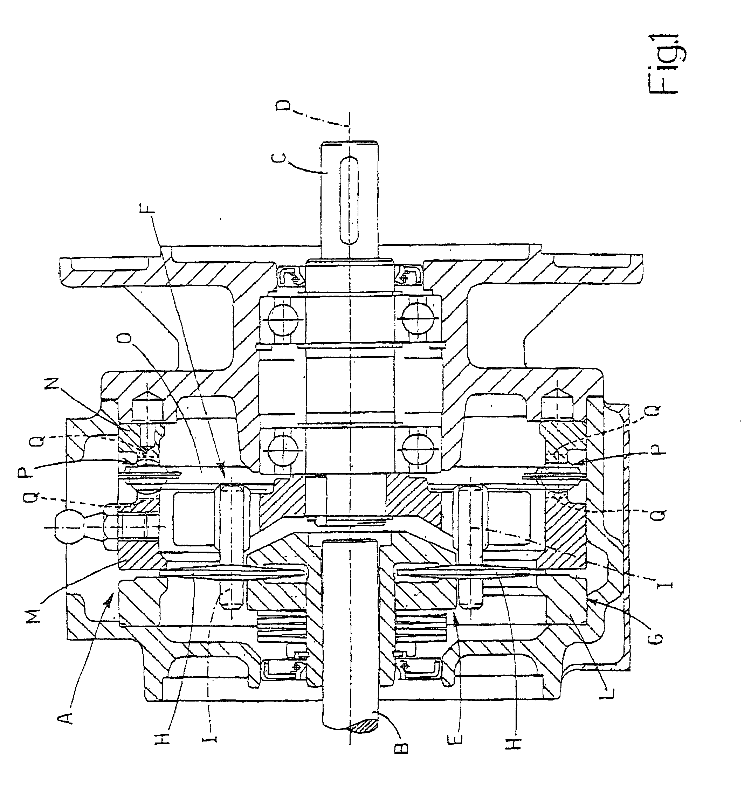

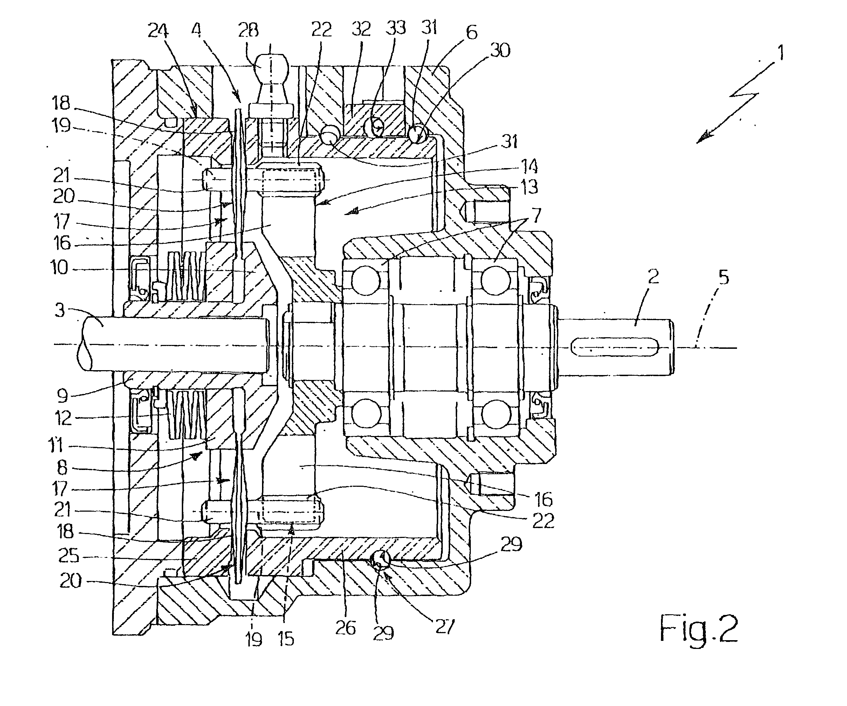

Number 1 in Figure 2 indicates as a whole a variable-speed drive for selectively varying the angular velocity of an output shaft 2 with respect to a constant angular velocity of an input shaft 3 by means of an epicyclic gear 4 interposed between shafts 2 and 3.

Shaft 3 has a longitudinal axis 5 and is rotated about axis 5, and with respect to an outer tubular casing 6 coaxial with axis 5, by a known actuating device not shown; and shaft 2 is positioned substantially facing and coaxial with shaft 3, and is rotated about axis 5, and with respect to casing 6, by gear 4 and with the support of two ball bearings 7.

Gear 4 comprises a sun gear 8 in turn comprising a tubular body 9, which is connected in angularly- and axially-fixed manner to shaft 3 and has, at one end, an annular flange 10 extending radially outwards from the outer surface of body 9. Sun gear 8 also comprises an annular plate 11, which is connected in axially-sliding manner to body 9 and is normally kept pressed against flange 10 by a spring 12 fitted to body 9 and coaxial with axis 5.

Gear 4 also comprises a planet carrier 13 in turn comprising a disk 14, which is connected in angularly-and axially-fixed manner to shaft 2, has a substantially cylindrical outer surface 15, and comprises a number of grooves 16 (four in the example shown) equally spaced about axis 5 and extending radially inwards from surface 15.

Gear 4 also comprises a number of planet gears 17 equal in number to grooves 16 and each comprising a respective disk 18, which has a longitudinal axis 19 substantially parallel to axis 5, is defined axially by two substantially truncated-cone-shaped surfaces 20, and has a pin 21 coaxial with axis 19.

Pin 21 is fitted in rotary and axially-fixed manner inside a bush 22, which is substantially parallelepiped-shaped so as to engage in sliding manner a respective groove 16.

Finally, gear 4 comprises an outer ring gear 24 in turn comprising a ring 25 coaxial with axis 5 and connected in angularly- and axially-fixed manner to casing 6, and a ring 26 which is coaxial with axis 5, is positioned facing ring 25, and is connected to casing 6 by a recirculating-ball coupling 27 so as to move axially to and from ring 25 when rotated by a control pawl 28 projecting radially outwards from the lateral surface of ring 26 itself.

Coupling 27 comprises two tracks 29 coiling along and about axis 5, one on the outer surface of ring 26 and the other on the inner surface of casing 6, and which have respective substantially arc-shaped cross sections and are positioned facing each other to define a channel 30 along which are distributed and travel a number of balls 31. Coupling 27 also comprises a block 32 having a channel 33 facing the outer surface of ring 26 and for recirculating balls 31 along channel 30.

In actual use, planet gears 17 are connected frictionally to both sun gear 8 and ring gear 24. More specifically, each planet gear 17 is gripped between flange 10 and plate 11 and between rings 25 and 26 so as to rotate about respective axis 19 and simultaneously about axis 5 and so rotate planet carrier 13 about axis 5.

The ratio between the angular velocities of shafts 2 and 3 is varied by adjusting the radial position of planet gears 17 with respect to sun gear 8, i.e. by adjusting the distance between axes 19 and axis 5. More specifically, when axes 19 of planet gears 17 are located a maximum distance (Figure 2) from axis 5, the angular velocity of planet carrier 13, and therefore of shaft 2, is minimum. Conversely, when axes 19 of planet gears 17 are located a minimum distance (not shown) from axis 5, the angular velocity of planet carrier 13, and therefore of shaft 2, is maximum.

The radial position of planet gears 17 with respect to sun gear 8 is varied by means of pawl 28 and recirculating-ball coupling 27, so that:
when ring 26 is moved towards ring 25, the grip exerted by rings 25 and 26 on truncated-cone-shaped surfaces 20 moves planet gears 17 radially towards axis 5 in opposition to spring 12; and
when ring 26 is moved away from ring 25, the grip exerted on truncated-cone-shaped surfaces 20 by flange 10 and plate 11 of sun gear 8, with the aid of spring 12, moves planet gears 17 radially towards outer ring gear 24.

Variable-speed drive 1 has several advantages, foremost of which are that recirculating-ball coupling 27 is relatively cheap and easy to produce, and provides for relatively little friction between ring 26 and outer tubular casing 6.

Moreover, by virtue of channel 30 having a substantially circular cross section and being engaged by a relatively large number of balls 31, the contact pressures between channel 30 and each ball 31 are relatively small, thus enabling casing 6 to be made using materials which are relatively cheap and/or require no surface treatment.

## Claims

1. A mechanical variable-speed drive comprising an epicyclic gear (4) interposed between an input shaft (3) and an output shaft (2) mounted to rotate about a given longitudinal first axis (5) at a first and second angular velocity respectively, the epicyclic gear (4) comprising a sun gear (8) connected in angularly-fixed manner to said input shaft (3), a planet carrier (13) connected in angularly-fixed manner to said output shaft (2), a number of planet gears (17), each having a respective longitudinal second axis (19) substantially parallel to said first axis (5), and an outer ring gear (24) substantially coaxial with the first axis (5), said planet gears (17) being connected frictionally to said sun gear (8) and to said ring gear (24) to rotate about the respective said second axes (19) and about said first axis (5) so as to rotate said planet carrier (13) about the first axis (5), and said ring gear (24) comprising an angularly- and axially-fixed first ring (25), and a second ring (26) movable to and from said first ring (25) to control the radial position of said second axes (19) with respect to said first axis (5) and so vary the velocity ratio of said input shaft (3) and said output shaft (2); a body (6) extending at least partly about said second ring (26); and connecting means (27) for connecting said second ring (26) to said body (6) and enabling the second ring (26) to move along said first axis (5) when the second ring (26) is rotated about the first axis (5); **characterized in that** said connecting means (27) are recirculating-ball connecting means comprising two tracks (29) coiling along and about said first axis (5), said tracks (29) being formed respectively on an inner surface of said body (6) and on an outer surface of said second ring (26), and being positioned facing each other to define a channel (30); and a number of balls (31) distributed along said channel (30).

2. A variable-speed drive as claimed in Claim 1, wherein said connecting means (27) also comprise a further channel (33) for recirculating said balls (31) along said channel (30).

3. A variable-speed drive as claimed in any one of the foregoing Claims and also comprising an outer tubular casing (6); said body (6) being formed in one piece with said casing (6).

4. A variable-speed drive as claimed in any one of Claims 1 to 3 and also comprising an outer tubular casing (6); said body (6) being connected in axially- and angularly-fixed manner to said casing (6).

## Patentansprüche

1. Mechanischer Antrieb mit variabler Übersetzung, der ein Planetengetriebe (4) aufweist, das zwischen einer Eingangswelle (3) und einer Ausgangswelle (2) angeordnet ist, und befestigt ist, um um eine vorgegebene erste Längsachse (5) jeweils mit einer ersten und einer zweiten Winkelgeschwindigkeit zu drehen, wobei das Planetengetriebe (4) ein Sonnenrad (8) aufweist, das in einer winkelfesten Art mit der Eingangswelle (3) verbunden ist, einen Planetenträger (13), der in einer winkelfesten Art mit der Außenwelle (2) verbunden ist, eine Anzahl an Planetenrädern (17), von denen jedes eine jeweilige zweite Längsachse (19) besitzt, die im wesentlichen parallel zur ersten Achse (5) ist, und einen äußeren Zahnring (24), der im wesentlichen koaxial zu der ersten Achse (5) ist, wobei die Planetenräder (17) über Reibung mit dem Sonnenrad (8) und mit dem Zahnring (24) verbunden sind, um um die jweiligen zweiten Achsen (19) und um die erste Achse (5) zu drehen, um den Planetenträger (13) um die erste Achse (5) zu drehen, und wobei der Zahnring (24) einen winkel- und axialfesten ersten Ring (25) aufweist, und einen zweiten Ring (26), der bewegbar zu und von dem ersten Ring (25) ist, um die radiale Position der zweiten Achsen (19) in Bezug zu der ersten Achse (5) zu steuern und so das Übersetzungsverhältnis der Eingangswelle (3) und der Ausgangswelle (2) zu variieren; einen Körper (6), der sich wenigstens teilweise um den zweiten Ring (26) erstreckt; und eine Verbindungsvorrichtung (27) zum Verbinden des zweiten Rings (26) mit dem Körper (6) und um den zweiten Ring (26) in die Lage zu versetzen, sich entlang der ersten Achse (5) zu bewegen, wenn der zweite Ring (26) um die erste Achse (5) gedreht wird; **dadurch gekennzeichnet, daß** die Verbindungsvorrichtungen (27) Kugelumlaufverbindungsvorrichtungen sind, die zwei Spurrillen (29) aufweisen, die entlang und um die erste Achse (5) gewickelt verlaufen, wobei die Spurrillen (29) jeweils auf einer Innenseite des Körpers (6) und auf einer Außenseite des zweiten Rings (26) ausgebildet sind und einander gegenüberliegend angeordnet sind, um einen Kanal (30) zu begrenzen; und eine Anzahl an Kugeln (31), die entlang des Kanals (30) verteilt sind.

2. Antrieb mit variabler Übersetzung gemäß Anspruch 1, wobei die Verbindungsvorrichtungen (27) des weiteren einen weiteren Kanal (33) zum Umlaufen der Kugeln (31) entlang des Kanals (30) aufweisen.

3. Antrieb mit variabler Übersetzung gemäß einem der vorhergehenden Ansprüche, und der des weiteren ein äußeres rohrförmiges Gehäuse (6) aufweist, wobei der Körper (6) in einem Stück mit dem Gehäuse (6) ausgebildet ist.

4. Antrieb mit variabler Übersetzung gemäß einem der Ansprüche 1 bis 3 und der des weiteren ein äußeres rohrförmiges Gehäuse (6) aufweist; wobei der Körper (6) in einer axialund winkelfesten Art und Weise mit dem Gehäuse (6) verbunden ist.

## Revendications

1. Transmission mécanique à rapport variable comprenant un train épicycloïdal (4) interposé entre un arbre d'entrée (3) et un arbre de sortie (2) montés pour tourner autour d'un premier axe longitudinal donné (5) respectivement à une première et à une deuxième vitesses angulaires, le train épicycloïdal (4) comprenant un planétaire (8) lié de manière fixe angulairement à l'arbre d'entrée (3), un châssis (13) lié de manière fixe angulairement à l'arbre de sortie (2), un certain nombre de satellites (17) ayant chacun un deuxième axe longitudinal respectif (19) sensiblement parallèle au premier axe (5), et une couronne extérieure (24) dont l'axe coïncide sensiblement avec le premier axe (5), les satellites (17) étant liés par friction au planétaire (8) et à la couronne extérieure (24) pour tourner autour des deuxièmes axes respectifs (19) et autour du premier axe (5) afin de faire tourner le châssis des satellites (13) autour du premier axe (5), et la couronne extérieure (24) comprenant une première couronne (25) fixe angulairement et axialement et une deuxième couronne (26) pouvant se rapprocher et s'éloigner de la première couronne (25) pour commander la position radiale des deuxièmes axes (19) par rapport au premier axe (5) et ainsi faire varier le rapport des vitesses de l'arbre d'entrée (3) et de l'arbre de sortie (2), un corps (6) s'étendant au moins en partie autour de la deuxième couronne (26), et des moyens de liaison (27) destinée à relier la deuxième couronne (26) au corps (6) et permettre à la deuxième couronne (26) de se déplacer le long du premier axe (5) lorsque la deuxième couronne (26) est tournée autour du premier axe (5), **caractérisé par le fait que** les moyens de liaison (27) sont des moyens de liaison à recirculation de billes comprenant deux pistes (29) s'enroulant le long et autour du premier axe (5), ces pistes (29) étant formées respectivement sur une surface intérieure du corps (6) et sur une surface extérieure de la deuxième couronne (26), et étant placées face à face pour délimiter un canal (30), et un certain nombre de billes (31) étant départies le long du canal (30).

2. Transmission à rapport variable selon la revendication 1, dans laquelle les moyens de liaison (27) comprennent aussi un autre canal (33) pour la recirculation des billes (31) le long du canal (30).

3. Transmission à rapport variable selon l'une des revendications précédentes et comprenant aussi une boîte tubulaire extérieure (6), le corps (6) étant formé d'une seule pièce avec cette boîte (6).

4. Transmission à rapport variable selon l'une des revendications 1 à 3 et comprenant aussi une boîte tubulaire extérieure (6), le corps (6) étant lié de manière fixe axialement et angulairement à cette boîte (6).
